# EUROPEAN PATENT SPECIFICATION

(11) **EP 4 286 141 B1**
(45) Date of publication and mention of the grant of the patent: **04.06.2025**
(21) Application number: 23170545.0
(22) Date of filing: 28.04.2023
(51) Int. Cl.: B29C 70/52, B29D 12/00

(54) **PULTRUDED PRODUCT MADE OF COMPOSITE MATERIAL, PROCESS AND APPARATUS FOR MAKING THE SAME**
PULTRUDIERTES PRODUKT AUS VERBUNDMATERIAL, VERFAHREN UND VORRICHTUNG ZUR HERSTELLUNG DESSELBEN
PRODUIT PULTRUDÉ EN MATÉRIAU COMPOSITE, PROCÉDÉ ET APPAREIL POUR SA FABRICATION

(30) Priority: 31.05.2022 IT 202200011522
(43) Date of publication of application: 06.12.2023
(73) Proprietor: Top Glass Industries S.p.A., 25128 Brescia BS (IT)
(72) Inventor: BRANCA, Alfonso, 20145 Milano (IT)
(74) Representative: PGA S.p.A.

(56) References cited:
- DE-A1- 10 014 376
- GB-A- 2 282 096

## Description

### FIELD OF THE INVENTION

The object of the present disclosure is a pultruded product made of composite material and a process as well as an apparatus for the making thereof. The present disclosure also concerns a support frame comprising one or more pultruded products made of composite material, which may for example be usable for manufacturing tensile structures or modular support frames, as well as in the construction and naval fields for manufacturing scaffoldings.

### BACKGROUND ART

In the building field and in the naval industry support frames for scaffoldings made in metallic material, for example steel or aluminum, are known. These frames can for example comprise scaffoldings of traditional type, for example used for the manufacture of masonry works, constituted by a plurality of substantially "H"-shaped frames and constrained to each other by means of horizontal beams. Each frame is engaged to a horizontal beam by means of a joint having two shells capable of engaging, by means of pins or bolts, respectively a pillar of the H-shaped frame and a horizontal beam.

Although the scaffoldings described are widely used, the Applicant has observed that the latter have limitations and drawbacks. Such structures are in fact unsuitable for use in corrosive environments such as for example nautical yards or uses in maritime locations. The corrosion of metallic materials in fact causes deterioration from the chemical-physical interaction with the surrounding environment. By effect of the corrosive process, metallic material undergoes a progressive and irreversible decay, of chemical nature, of its technological properties. The damages produced by corrosion are very significant and can cause the replacement of the entire structure or of components thereof or otherwise costs of maintenance aimed at preserving the metal structures used.

For these reasons, the traditional frames, when used in environments corrosive for metals (for example environments close to maritime areas) show a reduced operating reliability, as well as high maintenance costs.

An example of pultruded product, disclosed by GB2282096A, is a tubular cylindrical body having a plurality of annular projections transversely spaced by grooves. GB2282096A further discloses a pultrusion process for making the product using molds to form the annular projections.

A second example of pultruded product, disclosed by DE10014376A1, is a U-shaped body having a flat upper surface with transverse grooves spaced from each other. DE10014376A1 further discloses a pultrusion process for making the product using a forming belt to create the grooves on the flat upper surface of the product.

### OBJECT OF THE INVENTION

Purpose of the present invention is then to solve at least one of the drawbacks and/or limitations of the previous solutions.

A purpose of the present disclosure is to provide a product made of composite material, for example a tube, free of metallic components.

It is also a purpose of the present invention to avoid or minimize the execution of material removal operations for the manufacture of the pultruded products made of composite material.

Another purpose of the present invention is to provide pultruded products made of composite material through continuous pultrusion processes.

Another purpose of the present disclosure is to offer a support frame comprising pultruded products made of composite material both capable of operating without functional problems and in aggressive environments, for example in maritime areas.

It is another purpose of the present disclosure to make available a support frame comprising pultruded products made of composite material that shows a high reliability grade and that requires a reduced number of maintenance interventions.

These purposes and others, which will be clearer from the following description, are substantially reached by a product made of composite material, a process for the manufacture thereof and a support frame comprising said product according to one or more of the attached claims and/or of the following aspects.

### SHORT DESCRIPTION OF FIGURES

Some embodiments and some aspects of the invention will be described hereinafter with reference to the attached figures, provided for illustrative purposes only and therefore not limiting, wherein:
- figure 1 is a perspective view of a longitudinal portion of a pultruded product according to the present disclosure,
- figure 1A is a cross-section view according to the section IA-IA of figure 1,
- figure 2 is another perspective view of a longitudinal portion of a variant of a pultruded product according to the present disclosure,
- figure 3 is a schematic view of the outer shape of a longitudinal section taken according to section III-III of the pultruded product of figure 2,
- figures 4, 5 and 5A are schematic views of pultrusion apparatuses for the manufacture of the product according to the present invention,
- figures 6 and 7 are schematic views relative to additional elements respectively usable in the pultrusion apparatuses of figures 4, 5 and 5A, for the manufacture of the product according to the present invention,
- figure 8 is a schematic view of a support frame, for example usable for scaffoldings, obtainable through use of the pultruded products of figure 1 or figure 3, according to other aspects of the present disclosure,
- figure 9A is a perspective view of a joint usable in the support frame of figure 8, and
- figure 9B shows a sectioned perspective of the joint of figure 9A,

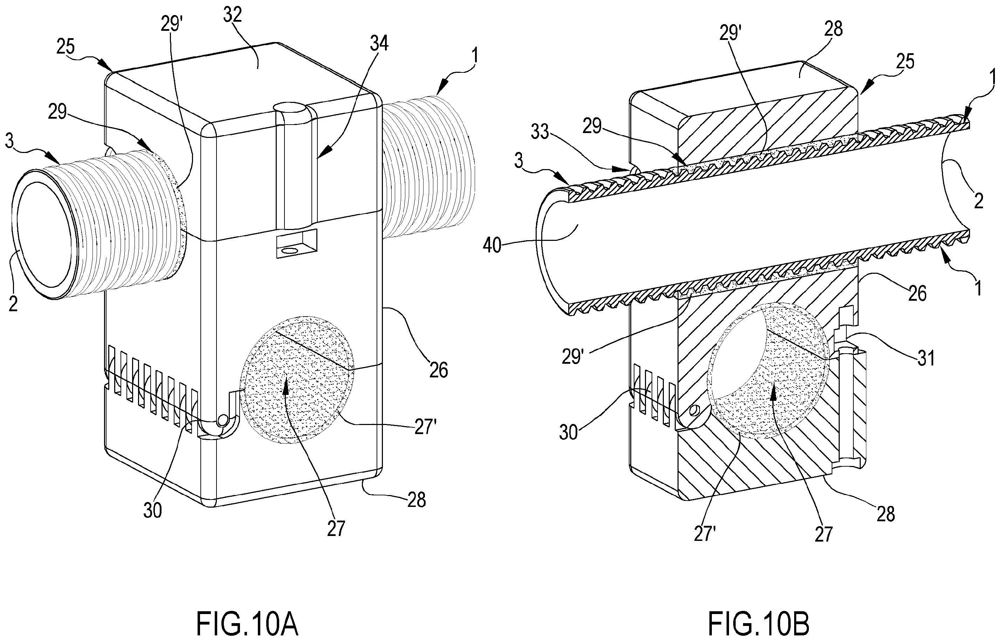

- figure 10A is a perspective view of a variant of a joint usable in the support frame of figure 8, and
- figure 10B shows a sectioned perspective of the joint of figure 10A.

### DEFINITIONS AND CONVENTIONS

It is noted that in the present detailed description corresponding parts shown in the various figures are indicated with the same numerical references. Figures may show the object of the invention through unscaled representations; therefore, parts and components shown in the figures related to the object of the invention may refer exclusively to the schematic representations.

With the terms upstream and downstream used in the description of pultrusion apparatuses it is intended components operating upstream or downstream with respect to other components as well as to steps carried out upstream or downstream with respect to other steps with reference to the feeding direction of the pultruded semifinished product during the process of pultrusion.

In the present description and in the claims the term pultrusion comprises processes wherein the reinforcement materials, as continuous fibers arranged parallel to each other or reinforcing fiber fabrics or in reinforcing fiber mat or braided fibrous materials, are impregnated of resin and moved through a forming head or molding (which may be stationary or movable), downstream thereof operates a pulling system active on the continuous semifinished product exiting the forming head or molding. In other words the term pultrusion is here used for meaning processes which comprise one of the following:
- classical pultrusion,
- pull-winding,
- pull-braiding,
- combination of classical pultrusion with pull-winding,
- combination of classical pultrusion with pull-braiding
- combination of pull-winding with pull-braiding,
- combination of classical pultrusion with pull-winding and pull-braiding.

### DETAILED DESCRIPTION

### Pultruded product made of composite material

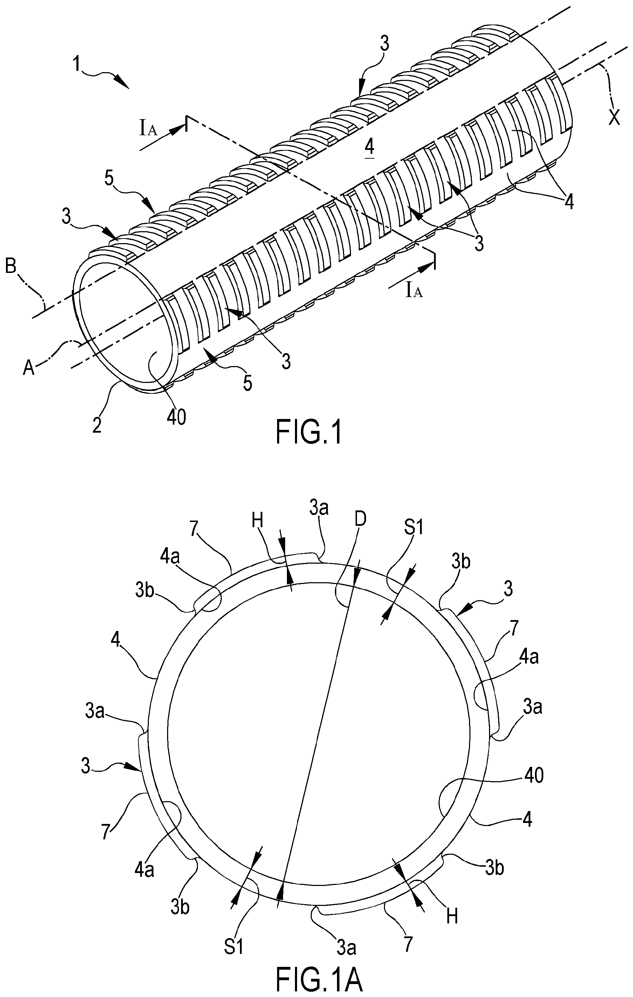

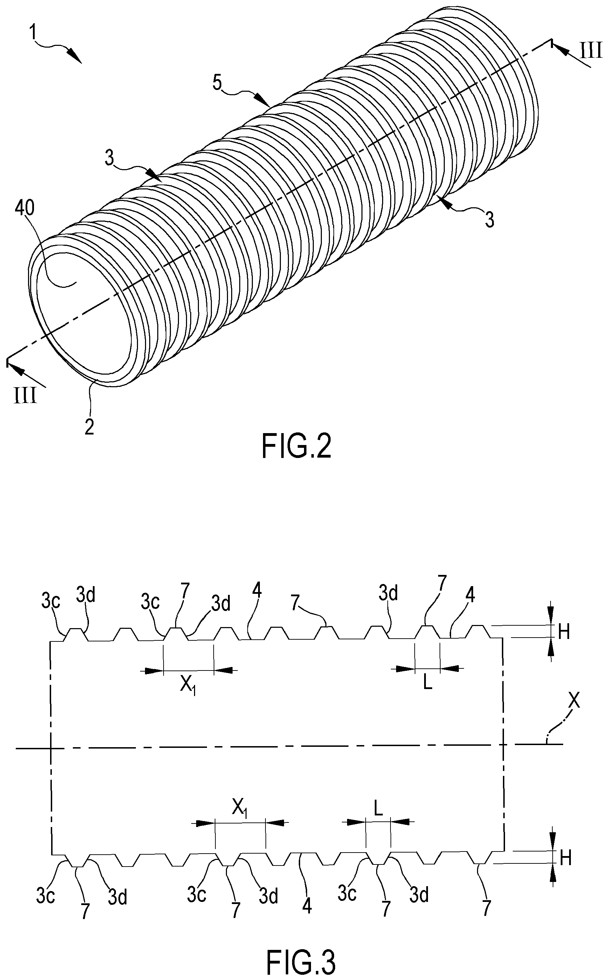

With 1 has been overall indicated a pultruded product made of composite material (in figure 1 and in figure 2 it is shown a longitudinal portion thereof), for example usable for making support frames, such as for example tensile structures, modular support frames or scaffoldings usable in the building and naval field, frames and structures usable in offshore uses for example on oil platforms or similar.

As for example shown in figure 1, the product comprises an elongated body 2 of tubular shape extending along a predetermined prevalent development direction X. In the attached figures it is shown a tubular elongated body of substantially cylindrical shape, however, it is not excluded the manufacture of an elongated body having a prismatic shape with polygonal section, for example square or rectangular.

The elongated body of the product 1 has an inner volume, perimetrically bounded by an optionally cylindrical inner surface 40. The elongated body 2 has furthermore an outer surface comprising a base surface 4 also of optionally cylindrical shape from which emerge projections 3, as it will be better described hereinafter. In the example shown in figure 2, the elongated body 2 has, in cross-section view, a circular shape with closed profile with wall thickness S1 constant along the longitudinal development of the elongated body. It is noted that in this context it is intended for wall thickness, the thickness S1 measured between the inner surface 40 of the elongated body 2 and the base surface 4, which is constant as above mentioned and comprised between 2 mm and 15 mm, optionally comprised between 3 mm and 10 mm.

As mentioned, the outer surface of the elongated body has also one or more projections 3 made in one piece with base surface 4. In particular, the projections 3 emerge from the base surface 4 transversely to the prevalent development direction X of the elongated body 2 and are spaced from each other along the same direction X, i.e. longitudinally to the product 1, from one section (in particular by a smooth section) of the base surface 4.

Each projection 3 has an elongated shape transverse to the prevalent development direction X (see figures 1, 1A and 2). Each projection 3 may be defined by a respective discrete element of limited extension: for example, by observing the profile of a transverse section of the product of figure 1 (see then figure 1A), each projection elongates along part of the outer profile of this transverse section; in fact in the case of figure 1, 1A are provided multiple projections angularly spaced from each other along the outer profile of the same transverse section of the product. Alternatively, the projections 3 may be defined by successive sections of a same continuous element, for example with helical pattern, protruding from the base surface 4 (not shown solution). In another variant (see figure 2) the projections may be different discrete elements projecting from respective portions of the base surface 4 spaced from each other and of annular shape, for example of circular shape, which extend radially around the entire base surface 4 of the elongated body.

As visible in figures 1, 1A and 2, the product 1 may present one or more series 5 of projections 3 positioned next to each other along a direction parallel to the prevalent development direction X of the elongated body 2 and arranged along respective trajectories to each other parallel transverse to the prevalent development direction X. As for example shown in figure 3, each projection may show, in a longitudinal section plane that cuts the projections 3 and is parallel to the prevalent development direction X, a shape defined by:
- a section 4a of the base surface 4,
- a first and a second flank 3c, 3d emerging from the base surface 4 and spaced from each other at the same base wall, and
- a top 7 opposite to the section 4a of the base surface and joining the flanks 3c, 3d.

As previously mentioned, the projections 3 are equidistant to each other, of a pitch X1 measured between two first flanks 3c of two projections 3 of the series 5 longitudinally adjacent to each other. This pitch is for example comprised between 0,5 mm and 30 mm, for example between 3 and 20 mm. In the attached figures, are also shown projections having a predetermined base width L, measured in between the flanks 3c, 3d of a same projection 3, at the base surface. This base width L of each projection may be comprised between 0.5 mm and 10 mm, and for example between 1 and 5 mm. Still with reference to the shape of each projection in longitudinal section (figure 3), the top 7 is at a predetermined height H from the section 4a of the base surface 4 which delimits the projection itself. This height H may be comprised between 0.5 mm and 10 mm, and for example between 1 and 5 mm. However, it is not excluded the manufacture of projections having width, height and pitch different with respect to what is described.

With reference now to the view in a section transverse to the prevalent development direction X of the elongated body 2 (for example figure 1A), the projection 3 has as already said height H with respect to the base surface 4. The height H may be of dimensions proportional to a maximum overall dimension of the cavity of the elongated body 2, for example the height H may be a function of the diameter D of the elongated body 2 (should this defines a cylindrical cavity) delimited by the inner surface 40. The ratio between the height H of each projection 3 and the diameter D may be then comprised between 4 and 30, optionally between 15 and 25. The height of the projection H may also be proportional to the dimensions of the wall thickness S1 of the elongated body 2: for example, the ratio between the wall thickness S1 itself and the height H of each projection 3 may be comprised between 0.5 and 2.0, optionally between 1.0 and 1.5.

As already mentioned the projections 3 may be continuous annular projections or discrete segments: for example in the embodiment shown in figure 1, the projections 3 have a tooth shape extending between a first and a second end 3a, 3b transversely offset from each other on the base surface 4, for example of an angle comprised between 5° and 40°.

Each series 5 of projections may have a plurality of projections 3 arranged next to each other along the prevalent development direction X of the elongated body, wherein the first ends 3a of respective projections 3 are aligned along a direction A parallel to the prevalent development direction X of the elongated body 2, and wherein the second ends 3b of respective projections 3 of the series 5 are aligned along another direction B parallel to the direction A. In other words, each series 5 defines a longitudinal strip laterally delimited by sections of the base surface 4 free from projections.

The product may comprise a plurality of series 5 of projections defining respective longitudinal strips angularly offset from each other. The product may have from 2 to 12 series 5 of projections mutually flanked and angularly equidistant to each other. In particular the strips 5 of projections may be angularly offset from each other of an angle comprised between 5° and 170°, optionally comprised between 10° and 60° (figure 1A), spaced by sections of the base surface 4 free from projections. It is also to be noted that the series 5 of projections are preferably identical to each other and the toothshaped discrete projections 3 or the ones continuous of annular shape (figure 2) show, in longitudinal section view, the same geometric characteristics as previously described, to which reference is made. From the point of view of the materials, the composite product comprises synthetic reinforcing fibers 10 such as carbon fibers, glass fibers, aramid fibers, Kevlar, boron fibers or natural fibers such as natural fibers of animal origin, basalt fibers or natural fibers of plant origin. These reinforcing fibers 10 may be in part aligned (and arranged full-length) along a direction parallel to the prevalent development direction X of the elongated body. In addition or alternatively the fibers may be arranged according to cylindrical helix or according to bundles of fibers arranged inclined with respect to the prevalent development direction X. The reinforcing fibers are present in the product in a percentage by weight comprised between the 40% and the 75 %, optionally between the 55% and the 65%, with respect to the total weight of the product. The resin can for example comprise a thermoplastic or thermosetting polymer matrix, among which polyester, polyurethane, vinylester and epoxy resin, but also thermoplastic matrices such as the polybutylene terephthalate (PBT) and the polyethylene terephthalate (PET).

### Pultrusion process

It is also object of the present invention a pultrusion process for the manufacture of the product made of composite material 1 previously described and hereinafter claimed. This pultrusion process is carried out using a pultrusion apparatus 50 which, as subsequently detailed, is configured for realizing the transversal projections 3.

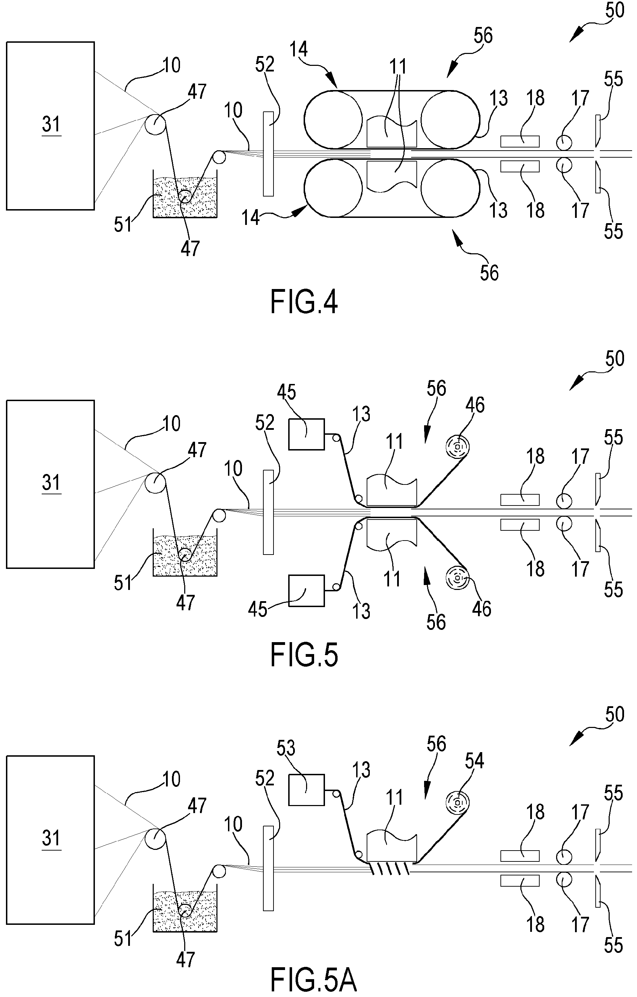

As shown in figures 4, 5 and 5A, the pultrusion process provides the following steps:
- impregnating a reinforcing fiber 10 with synthetic resin in a liquid state, for example in an impregnation station 51 of the apparatus 50 (it is to be noted that the impregnation station may comprise one or more open bath impregnation tanks and/or one or more injection impregnation units),
- moving the impregnated reinforcing fiber 10 towards a forming head or molding 11 of the apparatus 50 having at least one through opening intended to form the product (it is to be noted that although in the attached examples the forming head is stationary, it is not excluded the possibility of conferring mobility to the head itself),
- continuously forming, within the opening of the forming head 11, consecutive portions of the composite product.

The step of moving the reinforcing fiber 10, provides to feed a fiber or a set of reinforcing fibers (which may for example form woven or braided filaments, mat of fiber, or stay in shape of fibers arranged next to each other) 10, for example from one or more spools 31 or other feeding organs of fibrous material of the apparatus 50. It is to be noted that, according to the invention, the impregnated fibers, for example with thermosetting resin, may be fed parallel to each other and then unidirectionally arranged in the product in production (classical pultrusion). Alternatively or in combination with the arrangement of unidirectional fibers, impregnated fibers, for example with a thermosetting resin (generally epoxy), may be arranged according to one or more windings (pull-winding) and brought towards the forming head where the resin polymerizes. In other words, the fibers may be arranged parallel to each other or for example according to one or more helixes or in both the ways just described (i.e., part of the fibers arranged parallel to each other along the longitudinal development of the product and part of the fibers arranged inclined for example according to one or more helixes).

According to another alternative the fibers may be fed in form of braided layers (pull-braiding). The braided layers of fibers are impregnated of resin (for example of the above-described type) and sent to the forming head. This alternative may be combined either with the classical pultrusion or with the pultrusion of pull-winding type or with both of them.

The reinforcing fibers 10 impregnated with a quantity of synthetic resin at the station 51 can proceed towards a guiding and positioning station 52 (for example comprising a comb or a member equipped with a plurality of through openings for the opportune positioning of the fibers). The reinforcing fibers 10 may be moved upstream of the forming head 11 by means of rollers 47 of the apparatus 50 and/or pulled thanks to the action of a guiding member 17 positioned downstream of the forming head and still forming part of the pultrusion apparatus. The rollers 47 in cooperation with the guiding or pulling member 17 of the apparatus 50 (or even only the guiding or pulling member 17) are configured for tensioning the fibers and aligning them with respect to the opening of the forming head 11. For this purpose a control system for example comprising at least a control unit for example of digital or analog type, can coordinate the pulling action carried out by the guiding or pulling member 17 as well as, eventually, the movement imposed on the rollers 47 and optionally the braking imposed on the spools 31. The process object of the present invention provides the manufacture of the projections 3 through the use of at least an additional element 13 capable of forming continuously the mentioned projections on the outer surface of the product directly during the process of pultrusion: the structure of this additional element 13 will be subsequently detailed. The process initially provides for positioning a section upstream of the additional element 13, defined upstream of the forming head 11, in an area radially outside of reinforcing fibers 10, for example in contact with these latter. In particular, the section upstream of the additional element 13 is positioned at a respective section parallel to the reinforcing fiber 10 itself. The process provides subsequently of moving the additional element 13 synchronously with the reinforcing fibers, across the forming head 11. During this step, the additional element 13 has at least a surface positioned at a perimeter edge delimiting the through opening of the forming head 11; in other words, also during the step of crossing the forming head 11, the additional element 13 can contact the reinforcing fiber impregnated in an area radially outside of the product in production. The continuous product is then formed within the forming head 11, while the fibers and/or the resin are still in contact with the additional element 13. As for example shown in figures 4 and 5, the process may provide the use of two or more additional elements 13, each of them configured for contacting a respective area radially outside of the product in production, for making a respective series 5 of projections 3. It is to be noted that the forming of the product occurs continuously: in other words subsequent portions of the product exiting the forming head are kept in continuous movement. This movement is achieved with the guiding member 17, which may comprise, as shown in the attached figures, two or more rollers counter-rotating or alternatively one or more conveyors.

Subsequently to the step of forming, the process provides a step of solidification of the synthetic resin of the continuous product, which can occur both through exposure to natural light or through exposure to an actinic radiation directed towards the product, for example acheved through ultraviolet lamps 18 of the apparatus 50, for example operating immediately downstream of the forming head 11. It is to be noted that at least a part of the step of solidification can occur also within the forming head.

Subsequently to an at least partial solidification of the resin, for example before or after the complete solidification of the resin, the process may provide a step of separating the additional element 13 from the continuous product according to the modes subsequently described, variable according to the typology of additional element 13 used. The process ends with the execution of a step of cutting the continuous semifinished product obtained by pultrusion carrying out a transversal cut or separation to the reinforcing fiber 10, for example in a cutting station 55 of the apparatus 50, for defining respective composite products 1 of the above-described type, which may be stored and/or conveyed.

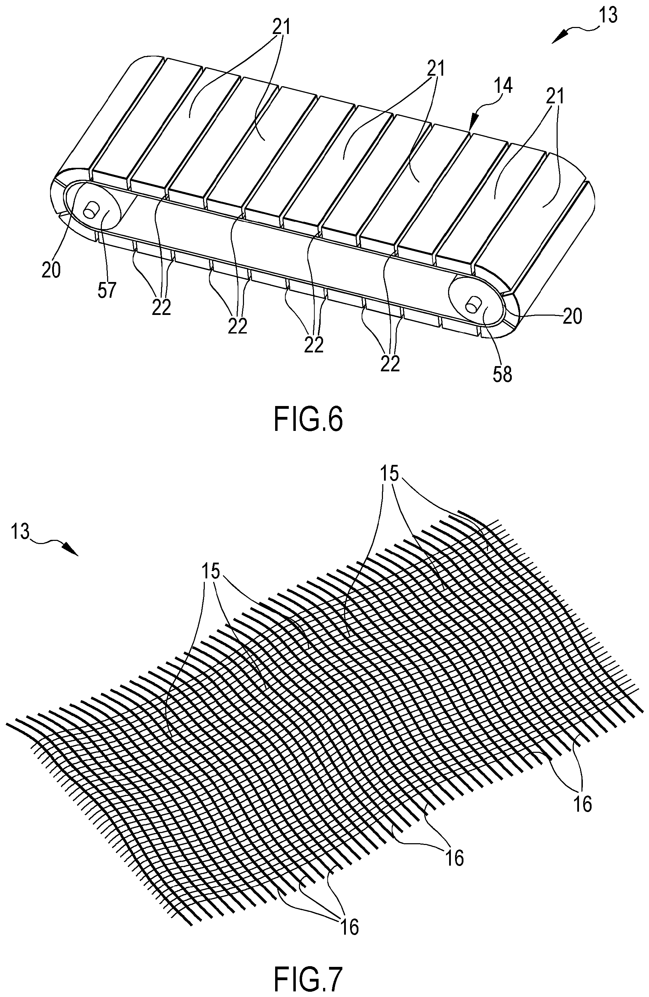

Descending into greater detail, the apparatus 50 comprises as already mentioned one or more additional elements 13, operating at the periphery of the product in production. Each additional element 13 may be defined, in an embodiment for example shown in figures 4 and 6, by a conveyor 14 being part of a positioning device 56 comprising a motor member 57 and a driven member 58 (for example a drive roller and a driven roller) around which it is arranged the conveyor 14 according to a closed loop operational path. The conveyor 14 and then the additional element 13 has an outer surface configured for contacting the reinforcing fiber 10 and forming the projections 3. As shown in detail in figure 6, the conveyor 14 has a base body 20 and a plurality of elements projecting 21 from the base body, to each other different and spaced for defining in interposition between two adjacent protruding elements 21, a channel 22 configured for housing at least partially reinforcing fiber 10 and resin, and then forming a projection 3. The channels 22, at least for a section of the operational path of the conveyor parallel to the reinforcing fibers 10, are transverse to the reinforcing fibers 10 themselves and generally transverse to the direction of pultrusion. The protruding elements 21 and the channels 22 define an outer surface preferably covered seamlessly from a layer in nonstick material, for example silicone-based material, polytetrafluoroethylene (PTFE) or polyvinyl alcohol (PVA). In this embodiment, the step of separating the additional element 13 from the product 1, provides exclusively the movement of the conveyor along its own operational path which deviates angularly with respect to the trajectory followed by the pultruded semifinished product, for allowing the extraction of the projections from channels 22.

In another embodiment for example shown in figures 5 and 7, each additional element 13 is a strip in fibrous material fed by a feeding station 45 of the apparatus 50 which during the process is positioned in an area radially outside of the reinforcing fibers 10 and configured for moving the additional element 13 itself in direction of the forming head 11, for example through the use of one or more conveyors or rollers. As for example shown in the schematic representation of figure 7 (representative of a strip of additional element 13), the fibrous material of the additional element has a first and a second series 15, 16 of fibers or wires transversal to each other. The fibers or the filaments are configured for forming the projections 3 and the base surface 4. In other words, the additional element 13 may be a strip in fabric, wherein warp and weft of the fabric are formed by woven wires (in turn formed by fibers) or directly woven fibers. For allowing the formation of the projections during the process of pultrusion, the fibers of the first series 15 (or the wire which constitutes the warp and weft of the fabric) may have transverse section (or thickness) of overall dimensions lower with respect to an overall dimensions of the transverse section (or thickness) of the fibers of the second series 16 (or of the wire which forms the weft or respectively the warp of the fabric): this allows to precisely form a fabric substantially shaped as in figure 7 where at regular intervals is present a type of protruding rib formed by wires of higher thickness positioned as already said or in direction of the warp or of the weft. Each projection 3 forms then in interposition between adjacent fibers or wires of the second series 16. In this last embodiment, the above mentioned step of separating the additional element 13 itself from the continuous product exiting the forming head 11, provides a step of releasing the fibrous material or fabric from the pultruded semifinished product (also in this case it is imposed downstream of the extrusion head a trajectory on the additional element 13 different to the one followed by the pultruded semifinished product) thanks to a recalling station, which, in figure 5 has been schematized by one or more rollers 46 of the apparatus 50 around which the fabric is wound again. In this second example it is then defined a positioning device 56 of the additional element 13 comprising the station 45 and the recalling station 46 above described.

In another embodiment, schematically represented in figure 5A, the apparatus 50 may comprise one or more feeders 53 each configured for feeding an additional element 13 in form of a continuous wire, for example in plastic material with high mechanical performances and melting point higher than 180°C (for example polyamides may be used as non-limiting such as nylon or kevlar). The wire is fed through the forming head 11 and arranged such as to form one or more loops inclined with respect to the prevalent development direction of the semifinished product in the step of forming in the head itself. For example it may be provided that the apparatus 50 comprises one or more feeders 53 rotating around the ideal feed axis of the product in production in such a way as to form on the periphery of this latter a projection 3 of helical pattern which is embedded (having the additional element 13 in form of wire to cross the forming head) in the resinous matrix. In a variant the additional element 13 in form of wire is left in the final product and then remains embedded in it, while in an alternative variant, the wire may be removed (and wound again on a respective spool 54) yet leaving anyway a cavity and a corresponding ridge of helical shape on the surface of the product in production. In this third example the feeder 53 and the rewinder 54 (the latter if present) define the positioning device 56 of the additional element 13 (in this case filiform with helical pattern) on the continuous semifinished product.

### Support frame

It is furthermore object of the present disclosure a support frame comprising a plurality of products made of composite material 1 according to the attached claims and/or according to the above indicated description. As previously mentioned, the support frame 100 may for example be a tensile structure or a scaffolding usable in the building and naval field.

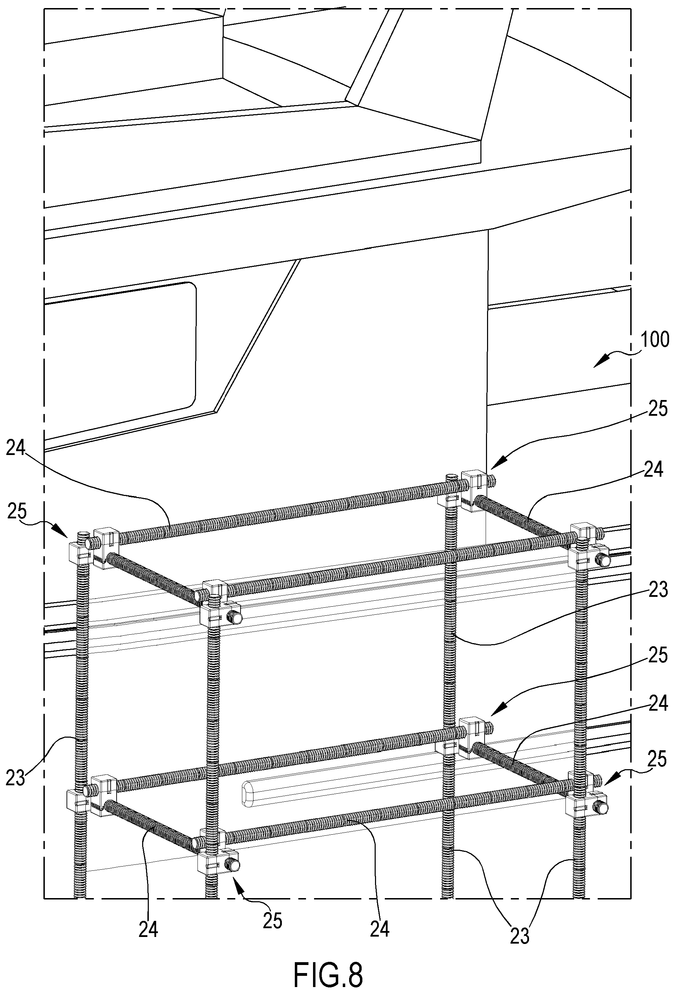

As for example shown in figure 8, the frame 100 has a plurality of pillars 23 made as the composite product previously described, each of which is engaged, through a joint 25, at least to a beam 24 also made as the product 1.

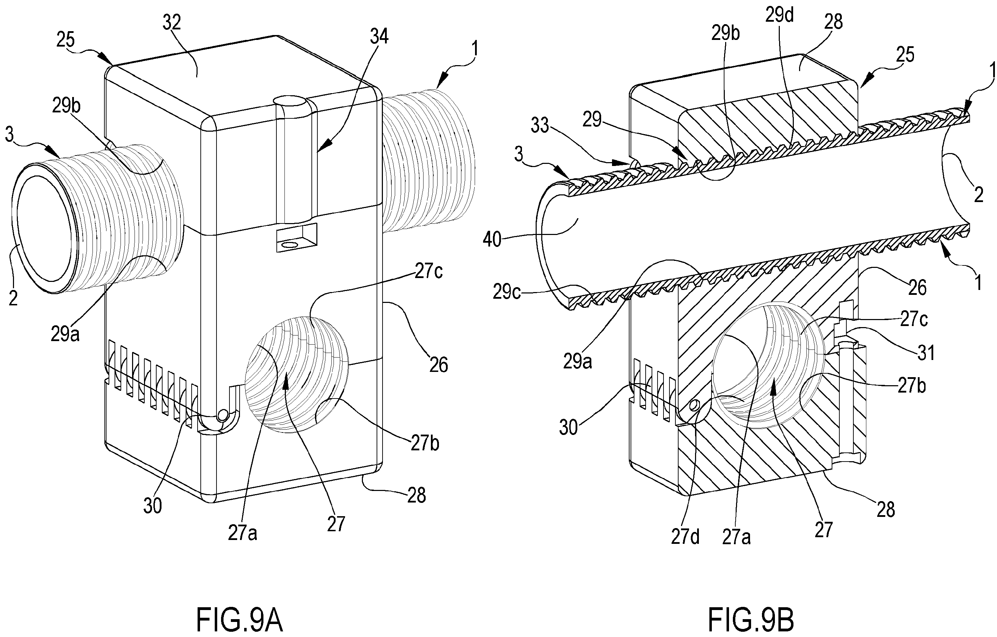

In conditions of use of the frame 100, the pillars 23 are positioned vertically with respect to the ground, while the beams 24 are positioned transverse to the pillars, engaged to the latter at a respective terminal end or of an intermediate area. As previously mentioned, the engagement between pillar 23 and beam 24 is obtained by joints 25 for example of the type shown in detail in figures 9A and 9B. Areas of intersection between a pillar 23 and a beam 24 (for example end areas or intermediate areas) are then engageable to a same joint.

Each joint 25 may have a main body 26 to which is engaged a half-shell 28, mobile relatively to the main body 26 itself between an opening condition and a closing condition. In the opening condition, the half-shell 28 is at least in part spaced from the main body 26 for allowing the insertion of the pillar 23 within a seat 27 defined by the body 36 and by the half-shell 28 (subsequently further described), while in the closing condition, the half-shell 26 is blocked to the main body 26 for preventing at least a relative movement between pillar and joint in axial direction or parallel to the prevalent development direction of the pillar 23.

In the shown embodiment, the main body 26 and the half-shell 28 define respective half-parts of the seat (27) with grooves 27a, 27b alternated to respective protuberances 27c, 27d delimiting the surfaces of each half-part of the seat 27.

In the closing condition between main body 26 and half-shell 28, the grooves 27a and the protuberances 27c associated to the first half-part of the seat 27 show concavity opposite to the concavity of the grooves 27b and protuberances 27d brought by the half-shell 28 and associated to the second half-part of the seat 27. Practically, grooves and protuberances 27a, 27c brought by the main body 26 define a first half-part of the seat 27, while grooves and protuberances 27b, 27d brought by half-shell 28 define a second half-part of the seat 27 facing the first half-part: the two half-parts are facing to each other (in closing condition between main body 26 and half-shell 28) for defining the seat 27. The grooves 27a, 27b are then alternated respectively by protuberances 27c and 27d emerging radially and configurated for engaging to projections 3 of the portion of pillar 23 inserted in the seat 27, for preventing or minimizing a relative axial movement between pillar 23 and joint 25. The seat 27 can show a substantially cylindrical embodiment (with corrugated surface given the presence of grooves spaced by protuberances) and in any case preferably countershaped to the shape of the outer surface of the pillar 23.

As for example shown in figures 9A and 9B, the half-shell 28 is engaged to main body 26 through a hinge 30 and an engaging element 31 operating in position spaced from the hinge 30. The engaging element 31 is configured for rotationally blocking the half-shell 28 to the main body 26 when in closing condition. The engagement element, which may for example comprise one or more screws or bolts or other movable pairing members, is on the other hand configured for being released or removed allowing the rotation of the half-shell around the hinge 30 and then the passage to the opening condition which allows the insertion or the removal of the pillar from the seat 27. In a not shown alternative embodiment it is possible to provide that, instead of the hinge 30, other removable constraining element 31 be provided. In another not shown embodiment it is possible to provide that the hinge and/or the engaging element above described are replaced by rivets or other constraining members that need to be destroyed for allowing the opening of the seat 27.

In another embodiment, the hinge 30 may be made by a plastic hinge i.e. by a portion of deformable material, joined by piece to half-shell 28 and to main body 26, which may then flex or bend for allowing to open or close the seat 27; for example the hinge may comprise a strip of plastic material (for example elastomeric) which connects the half-shell 28 with the main body 26.

The joint 25 furthermore has an auxiliary half-shell 32, mobile relatively to the main body 26 itself between a respective opening condition and a respective closing condition. In the opening condition, the auxiliary half-shell 32 is at least in part spaced from the main body 26 to allow insertion of a portion of the crossbar 24 within an auxiliary seat 29 (analogous to the seat 27 and subsequently further described), while in the closing condition, the auxiliary half-shell 32 is blocked to the main body 26 for closing the auxiliary seat 29 and preventing or minimizing a relative axial movement (i.e., directed along the prevalent development direction of the beam) between beam and joint. It is to be noted that the auxiliary seat 29 is different and spaced from the seat 27, extending transverse (for example perpendicularly) to the latter for allowing engagement of the crossbar 24 transverse to the upright 23. From a structural point of view the auxiliary seat 29 may be identical to the seat 27 above described. In particular, the main body 26 has auxiliary grooves 29a alternated by auxiliary protuberances 29c, while the auxiliary half-shell 32 has grooves 29b alternated to respective protuberances 29d.

In the closing condition between main body 26 and auxiliary half-shell 32, the auxiliary grooves 29a and the protuberances 29c associated to the main body 26 show concavity opposite to the concavity of the grooves 29b and protuberances 29d brought by the auxiliary half-shell 32. Practically, auxiliary grooves and auxiliary protuberances 29a, 29c of the main body 26 define a respective first half-part of the auxiliary seat 29, while grooves and protuberances 29b, 29d of the auxiliary half-shell 32 define a respective second half-part of the auxiliary seat 29 facing the first half-part: the two half-parts facing each other (in closing condition between main body 26 and auxiliary half-shell 32) define the auxiliary seat 29. The auxiliary grooves 29a of the main body and the grooves 29b of the auxiliary half-shell 32 are then alternated respectively by the auxiliary protuberances 29c of the main body and by the protuberances 29d of the auxiliary half-shell 32 emerging radially and configurated for engaging to the projections 3 of the portion of crossbar 24 inserted in the auxiliary seat 29, for preventing or minimizing a relative axial movement between crossbar 24 and joint 25. The auxiliary seat 29 may have a substantially cylindrical shape (provided with a corrugated surface, given the presence of grooves spaced by protuberances) and in any case preferably countershaped to the outer surface of the crossbar 24.

In a non-shown variant the main body 26 presents (instead of the grooves above described) a first half-part of said seat 27 covered by a layer in soft material 27'; analogously in this embodiment the half-shell 28 (instead of the grooves) has a second half-part of said seat 27 covered by a respective layer of soft material 27'; the soft material of each of said layers has deformability to the compression higher with respect to the one of the material forming the main body of the joint and higher with respect to the one of the material forming said one or more projections present on each pultruded product. In this way, when the joint is in closing condition of the seat 27, the projections can penetrate in the soft material positioned on the surface of the joint and axially anchor the pultruded product (crossbar or upright) to the seat 27 and then to the joint. In quite a similar way, according to this embodiment, the main body 26 may also present the first half-part of the auxiliary seat 29 covered by a layer in soft material 29', and the auxiliary half-shell 32 may present the second half-part of the auxiliary seat 29 covered by a respective layer of soft material 29'. Also in this case the layer of soft material of each of said layers replaces the grooves and has deformability to compression higher with respect to the one of the material forming the main body and higher with respect to the one of the material forming said one or more projections present on each pultruded product. For example, the soft material may be elastomeric material, silicone material or other. For example, a polyurethane elastomeric material may be used.

The above-described layers of soft material are for example continuous layers with constant thickness. Alternatively a prevalent part of each layer has constant thickness.

According to another aspect, the thickness of each layer is (at least for a prevalent part of the development of the layer on the respective half-shell) equal to or higher than the height H of each projection from the base surface 4. In this way the projection/s may (when the joint is tightened and the seats 27 and 29 closed) penetrate in the soft material and then obtain an efficient axial blocking. For example, the thickness of each layer of soft material may be comprised between 0.5 mm and 15 mm. The alternative wherein are provided the layers of soft material allows an efficient blocking also in case of projection or projections having geometric dimensions that are not very precise or machining tolerances that are not too extreme.

As for example shown in figures 9A and 9B, the auxiliary half-shell 32 is engaged to the main body 26 through a respective hinge 33 and a respective engaging element 34 operating in a position spaced from the hinge 33. The engaging element 34 is configured for rotationally blocking the auxiliary half-shell 32 to the main body 26 in the closing condition. The engagement element, which may for example comprise one or more screws or bolts or other removable coupling organs, is on the other hand configured for being loosened or removed allowing rotation of the auxiliary half-shell 32 around the hinge 33 and then passage to the opening condition which allows insertion or removal of the crossbar 24 from the auxiliary seat 29. In a non-shown alternative it is possible to provide that, instead of the hinge 33, another removable constraining element analogous to the engaging element 34 be provided. In another non-shown alternative, it is possible to provide that the hinge and/or the engaging element above described be replaced by rivets or other constraining organs that need to be destroyed for allowing opening of the auxiliary seat 29.

In another variant (analogous to what was discussed for the hinge 30), the hinge 33 may be made by a plastic hinge i.e., by a portion of material deformable that can then flex or bend for allowing to open and close the auxiliary seat 29; for example the hinge may comprise a strip of plastic material (for example elastomeric) which connects the auxiliary half-shell 32 with the main body 26.

From a constructive point of view it is possible to make the joint in various ways. For example the half-shell 28, the auxiliary half-shell 32 and the main body may be made by molding, for example injection molding and then connected with the hinges 30, 33 and the related engagement elements.

Alternatively the half-shell 28, the main body 26 and the auxiliary half-shell 32 may be made by molding (for example injection molding) making, directly during the step of molding, the mentioned plastic hinges 30 and 33. With regard to the alternative wherein the seats 27 and 29 are covered with soft material, this may be co-molded on the surface of the seats themselves in such a way as to form a joint entirely obtained by molding (for example injection molding) except obviously for the need of one or more engagement elements for the tightening of the seats 27 and 9.

As to the materials, the main body, the half-shell 28 and the auxiliary half-shell 32 may be made in high resistance and stiffness material such as for example nylon reinforced with fibers (for example, glass or carbon fibers). On the contrary, as already mentioned, the layer of soft material (if present) may be made using material with deformability (in particular to compression) considerably higher with respect to the one of the material used for the main body 26 and the half-shells 28, 32: for example a polyurethane elastomeric material may be used for each layer of soft material.

The construction of the support frame 100 shown in figure 8 follows arrangement and engagement of a plurality of uprights 23 to respective crossbars 24. This step provides the coupling of at least an upright 23 to at least a joint 25 through insertion of the upright within the seat 27 and of block of the half-shell 28 to the main body 26 of the joint by means of screws, pins or rivets. As previously described, the insertion of the desired portion of upright within the seat 27 occurs after the movement of the half-shell 28 from the closing position to the opening position. With the subsequent closure movement of the half-shell 28, the upright 23 may be blocked to the main body of the joint 25.

The process provides furthermore engagement of a crossbar 24 to the same joint 25 through insertion of the desired portion of the crossbar 24 within the auxiliary seat 29. By blocking the auxiliary half-shell 32 to the main body of the joint 25, blocking of the crossbar with respect to the auxiliary seat 29 of the joint 25 is obtained. Practically, the insertion of the desired portion of the crossbar 24 within the auxiliary seat 29 occurs in a way similar to the insertion of the desired portion of upright 23 in the seat 27 of the same joint.

The process provides then the repetition of the above indicated steps based on the number of uprights and crossbars to be transversely joined to each other, defining a configuration of the support frame for example of the type shown in figure 8. The support frame may furthermore be equipped with panels (not shown in the attached figures), engaged upwards of the crossbar 24 positioned on a same horizontal plane, which define respective walking planes for a user defining thus a scaffolding that uses as support the frame formed with the uprights and the crossbars above described.

## Claims

1. A pultrusion process for making a composite product comprising a tubular elongated body (2) extending along a prevalent development direction (X) and bounded by an outer surface comprising:
- a base surface (4) and
- one or more projections (3) emerging from the base surface (4) and arranged transversely to the prevalent development direction (X) of the elongated body (2), said projections or successive sections of the same projection being spaced apart from each other in a direction parallel to the prevalent development direction (X),
said process comprising:
- impregnating a reinforcing fiber (10) with synthetic resin in a liquid state, optionally with thermosetting resin,
- moving the impregnated reinforcing fiber (10) towards a forming head (11), wherein said forming head (11) has at least one through opening suitable for shaping the product,
- arranging across the forming head (11) two or more operating sections of respective additional elements (13) configured for forming respective projections (3),
- continuously forming, within the opening of the forming head (11), consecutive portions of a continuous composite semifinished product of tubular shape,
- transversely cutting a discrete segment of the continuous semifinished product for defining said composite product,
wherein respective upstream sections of each additional element, defined upstream of the corresponding operating section, are positioned at respective areas radially outer the continuous semifinished product.

2. Process according to the preceding claim, wherein the additional element (13) is moved, concurrently and in synchrony with the impregnated reinforcing fiber, towards, and across, the forming head (11); and
wherein the operating section passing across the forming head is positioned in correspondence of at least part of a perimeter edge delimiting the through opening of the forming head (11), in contact with impregnated resin or reinforcing fiber (10).

3. Process according to any one of the preceding claims, wherein the process involves separating each additional element (13) from the continuous semi-finished product exiting the forming head (11);
wherein the process also involves a solidification step comprising:
- emitting actinic radiation, optionally by ultraviolet lamps (18), in the direction of the continuous semifinished product; or
- exposing the continuous semifinished product to natural light,
and wherein at least part of the solidification step is subsequent to the step of extracting the portion of the continuous product from the forming head (11),
and wherein the step of separating each additional element (13) from the continuous semifinished product exiting the forming head (11) is prior to exposure to actinic radiation or complete solidification of the resin.

4. Process according to any one of the preceding claims, wherein at least one upstream section of said additional element (13), extending upstream with respect to the operating section crossing the forming head, is positioned at an area radially outside of a bundle of said impregnated reinforcing fiber (10), and wherein said additional element (13) in cooperation with the forming head, shapes the product such that:
a first part of said reinforcing fibers, arranged in a radially outer area of the product, is arranged adjacent to or partially within said projections, the reinforcing fibers of said first part of reinforcing fibers extending continuously along the product and exhibiting a wavy shape, and
a second part of said reinforcing fibers (10), which are arranged radially inward from the first part of reinforcing fibers and are substantially aligned along a direction parallel to the prevalent development direction (X) of the elongated body.

5. Process according to any one of the two preceding claims, wherein each additional element (13) is a conveyor (14) arranged along a closed loop operational path, wherein said conveyor (14) includes:
- a base body (20),
- a plurality of protruding elements (21) from said base body (20) and configured for defining one or more transverse channels (22) adjacent to each other and alternated with said protruding elements, optionally wherein the protruding elements (21) and the transverse channels (22) define an outer surface seamlessly coated with a layer of nonstick material,
wherein the step of separating each additional element (13) comprises a sub-step of moving said conveyor along its operational path, for allowing the extraction of the projections from the channels (22).

6. Pultrusion apparatus for making a composite product through a process according to any one of the preceding claims, said apparatus comprising:
- an impregnation station (51) configured for impregnating reinforcing fibers (10) with synthetic resin in a liquid state, optionally of thermosetting type, and forming impregnated reinforcement fibers, optionally wherein the impregnation station includes one or more open bath impregnation tanks and/or one or more injection impregnation units,
- a forming head (11), operating downstream of the impregnation station (51), wherein said forming head (11) has at least one through opening configured to receive said impregnated reinforcing fibers and intended to form a continuous composite semifinished product,
- two or more additional elements (13) configured for being arranged across the forming head (11) and having a respective operating section configured for forming said projections (3) on the continuous semifinished product of tubular shape,
- a pulling member (17) operating downstream of the forming head (11) and configured for acting on a formed portion of the continuous semifinished product and applying on the impregnated reinforcing fibers a pulling action directed towards the forming head (11);
- a cutting station (55) configured for transversally cutting discrete segments of the continuous semifinished product to define one or more composite products.

7. Apparatus according to the preceding claim, comprising a positioning device (56) configured for:
arranging at least one upstream section of at least one of said additional elements (13), extending upstream the operating section crossing the forming head, at an area radially outside of bundles of said impregnated reinforcing fiber (10) coming from the impregnation station (51), and/or
arranging the operating section of the additional element (13) crossing the forming head in correspondence of at least part of a perimeter edge delimiting the through opening of the forming head (11).

8. Apparatus according to the preceding claim, wherein the forming head (11) is configured to give to said composite product an elongated body (2) having a tubular shape; optionally with base surfaces (4) having cylindrical shape with a circular profile;
and wherein the apparatus comprises a plurality of positioning devices (56) configured for arranging across the forming head (11) two or more operative sections of respective additional elements to form respective sets of projections (3),
optionally wherein said positioning devices are angularly offset from each other and configured to act, during formation of the composite product, on respective sides of the same composite product being formed;
even more optionally wherein the apparatus includes a control unit (60), for example comprising a digital controller, communicatively connected with each positioning device (56) and with the pulling member (17) and configured to move each additional element (13) synchronously with the pulling member (17).

9. Apparatus according to any one of the preceding claims from 7 to 8, wherein the/each positioning device (56) is also configured for separating each additional element (13) from the continuous semifinished product exiting the forming head (11).

10. Apparatus according to any one of the preceding claims from 7 to 9, wherein each/a positioning device (56) comprises at least one motor member and at least one driven member and wherein each additional element (13) is a conveyor (14) arranged along a closed loop operating path engaging said motor member and said driven member,
wherein said carrier (14) includes:
- a base body (20),
- a plurality of protruding elements (21) from said base body (20) and configured for defining one or more channels (22) adjacent to each other and spaced by said projecting elements.

11. Apparatus according to any one of the preceding claims from 6 to 10, wherein the additional element (13) comprises a strip of fibrous material, optionally a textile product, having a first series (15) of fibers and a second series (16) of fibers arranged transverse to the fibers of the first series (15) and the reinforcing fibers (10), and wherein the positioning device (56) comprises a feeding station (45) of the strip of fibrous material,
wherein the fibers of the first and second series (15, 16) are configured for forming the projections (3) emerging from the base surface (4) of the elongated body (2), optionally wherein the ratio between a thickness of the fibers of the second series (16) and a thickness of the fibers of the first series (15) is comprised between 1.5 and 10.

12. Apparatus according to any one of the preceding claims from 6 to 11, wherein the additional element (13) comprises a wire, optionally a polyamide wire, and wherein the positioning device (56) comprises a feeder (53) of said wire configured for arranging the wire in a helical pattern around the continuous semifinished product, optionally wherein said feeder (53) is a feed spool rotating about an ideal feed axis of the pultruded semifinished product and wherein said wire has a diameter comprised between 0.5 mm and 3 mm, optionally between 1 mm and 2 mm.

13. Apparatus according to any one of the preceding claims from 7 to 12 comprising a lamp (18) configured for emitting an actinic radiation, optionally an ultraviolet radiation, toward said product;
wherein said lamp operates downstream of the forming head and it is configured for allowing at least partial solidification of the synthetic resin present in the pultruded product exiting the forming head; and
wherein the positioning device (56) is configured for separating the additional element from the pultruded semifinished product upstream of said lamp (18), optionally prior to exposure to said actinic radiation or prior to a complete solidification of the resin.

## Patentansprüche

1. Pultrusionsverfahren zum Herstellen eines Verbundprodukts, umfassend einen rohrförmigen, langgestreckten Körper (2), welcher sich entlang einer vorherrschenden Entwicklungsrichtung (X) erstreckt und durch eine Außenfläche beschränkt ist, umfassend:
- eine Grundfläche (4) und
- einen oder mehrere Vorsprünge (3), welche von der Grundfläche (4) heraustreten und transversal zur vorherrschenden Entwicklungsrichtung (X) des langgestreckten Körpers (2) angeordnet sind, wobei die Vorsprünge oder aufeinanderfolgende Sektionen desselben Vorsprungs in einer Richtung parallel zu der vorherrschenden Entwicklungsrichtung (X) voneinander beabstandet sind, wobei das Verfahren umfasst:
- Imprägnieren einer Verstärkungsfaser (10) mit Kunstharz in einem flüssigen Zustand, optional mit wärmehärtendem Harz,
- Bewegen der imprägnierten Verstärkungsfaser (10) in Richtung eines Formkopfes (11), wobei der Formkopf (11) mindestens eine Durchgangsöffnung aufweist, welche zum Ausbilden des Produkts geeignet ist,
- Anordnen, quer über den Formkopf (11), von zwei oder mehr Arbeitssektionen von jeweiligen zusätzlichen Elementen (13), welche dazu eingerichtet sind, jeweilige Vorsprünge (3) zu bilden,
- kontinuierliches Bilden, innerhalb der Öffnung des Formkopfes (11), aufeinanderfolgender Abschnitte eines kontinuierlichen Verbundhalbzeugs von rohrförmiger Gestalt,
- transversales Schneiden eines diskreten Segments des kontinuierlichen Halbzeugs zum Definieren des Verbundprodukts,
wobei jeweilige stromaufwärtige Sektionen von jedem zusätzlichen Element, welche stromaufwärts von der entsprechenden Arbeitssektion definiert sind, an jeweiligen Bereichen radial außerhalb des kontinuierlichen Halbzeugs angeordnet sind.

2. Verfahren nach dem vorhergehenden Anspruch, wobei das zusätzliche Element (13) gleichzeitig und synchron mit der imprägnierten Verstärkungsfaser hin zu und quer über den Formkopf (11) bewegt wird; und
wobei die Arbeitssektion, welche quer über den Formkopf verläuft, in Übereinstimmung mit mindestens einem Teil eines Umfangsrands, welcher die Durchgangsöffnung des Formkopfes (11) begrenzt, in Kontakt mit imprägniertem Harz oder Verstärkungsfaser (10) positioniert wird.

3. Verfahren nach einem der vorhergehenden Ansprüche, wobei das Verfahren Trennen jedes zusätzlichen Elements (13) von dem kontinuierlichen Halbzeug umfasst, welches den Formkopf (11) verlässt;
wobei das Verfahren auch einen Verfestigungsschritt involviert, umfassend:
- Emittieren aktinischer Strahlung, optional durch Ultraviolettlampen (18), in die Richtung des kontinuierlichen Halbzeugs; oder
- Aussetzen des kontinuierlichen Halbzeugs gegenüber natürlichem Licht,
und wobei mindestens ein Teil des Verfestigungsschritts nach dem Schritt des Extrahierens des Abschnitts des kontinuierlichen Produkts aus dem Formkopf (11) erfolgt,
und wobei der Schritt des Trennens jedes zusätzlichen Elements (13) von dem kontinuierlichen Halbzeug, welches den Formkopf (11) verlässt, vor Aussetzen gegenüber aktinischer Strahlung oder vollständiger Verfestigung des Harzes erfolgt.

4. Verfahren nach einem der vorhergehenden Ansprüche, wobei mindestens eine stromaufwärtige Sektion des zusätzlichen Elements (13), welche sich stromaufwärts in Bezug auf die Arbeitssektion erstreckt, welche den Formkopf kreuzt, in einem Bereich radial außerhalb eines Bündels der imprägnierten Verstärkungsfasern (10) positioniert ist, und wobei das zusätzliche Element (13) in Kooperation mit dem Formkopf das Produkt so ausbildet, dass:
ein erster Teil der Verstärkungsfasern, welcher in einem radial äußeren Bereich des Produkts angeordnet ist, benachbart zu oder teilweise innerhalb der Vorsprünge angeordnet ist, wobei sich die Verstärkungsfasern des ersten Teils der Verstärkungsfasern kontinuierlich entlang des Produkts erstrecken und eine wellige Form aufweisen, und
ein zweiter Teil der Verstärkungsfasern (10), welche radial einwärts von dem ersten Teil der Verstärkungsfasern angeordnet sind und im Wesentlichen entlang einer Richtung parallel zu der vorherrschenden Entwicklungsrichtung (X) des langgestreckten Körpers ausgerichtet sind.

5. Verfahren nach einem der beiden vorhergehenden Ansprüche, wobei jedes zusätzliche Element (13) ein Förderer (14) ist, welcher entlang eines geschlossen Betriebswegs angeordnet ist, wobei der Förderer (14) umfasst:
- einen Grundkörper (20),
- eine Mehrzahl von herausragenden Elementen (21) von dem Grundkörper (20) und dazu eingerichtet, einen oder mehrere transversale Kanäle (22) zu definieren, benachbart zueinander und abwechselnd mit den herausragenden Elementen, wobei optional die herausragenden Elemente (21) und die transversalen Kanäle (22) eine Außenfläche definieren, welche nahtlos mit einer Schicht aus Antihaftmaterial beschichtet ist, wobei der Schritt des Trennens jedes zusätzlichen Elements (13) einen Unterschritt des Bewegens des Förderers entlang seines Betriebswegs umfasst, um das Extrahieren der Vorsprünge aus den Kanälen (22) zu ermöglichen.

6. Pultrusionsvorrichtung zum Herstellen eines Verbundprodukts durch ein Verfahren gemäß einem der vorhergehenden Ansprüche, wobei die Vorrichtung umfasst:
- eine Imprägnierstation (51), welche dazu eingerichtet ist, Verstärkungsfasern (10) mit Kunstharz in einem flüssigem Zustand, optional vom wärmehärtenden Typ, zu imprägnieren und imprägnierte Verstärkungsfasern zu bilden, wobei optional die Imprägnierstation einen oder mehrere Offene-Bad-Imprägniertanks und/oder eine oder mehrere Injektionsimprägniereinheiten umfasst,
- einen Formkopf (11), welcher stromabwärts der Imprägnierstation (51) arbeitet, wobei der Formkopf (11) mindestens eine Durchgangsöffnung aufweist, welche dazu eingerichtet ist, die imprägnierten Verstärkungsfasern aufzunehmen, und dazu bestimmt ist, ein kontinuierliches Verbundhalbzeug zu bilden,
- zwei oder mehr zusätzliche Elemente (13), welche dazu eingerichtet sind, quer über dem Formkopf (11) angeordnet zu werden, und welche eine jeweilige Arbeitssektion aufweisen, welche dazu eingerichtet ist, die Vorsprünge (3) auf dem kontinuierlichen Halbzeug von rohrförmiger Gestalt auszubilden,
- ein Zugelement (17), welches stromabwärts des Formkopfes (11) arbeitet und dazu eingerichtet ist, auf einen geformten Abschnitt des kontinuierlichen Halbzeugs zu wirken und auf die imprägnierten Verstärkungsfasern eine Zugwirkung auszuüben, welche auf den Formkopf (11) gerichtet ist;
- eine Schneidestation (55), welche dazu eingerichtet ist, diskrete Segmente des kontinuierlichen Halbzeugs transversal zu schneiden, um ein oder mehrere Verbundprodukte zu definieren.

7. Vorrichtung nach dem vorhergehenden Anspruch, umfassend eine Positionierungsvorrichtung (56), welche dazu eingerichtet zum:
Anordnen mindestens einer stromaufwärtigen Sektion von mindestens einem der zusätzlichen Elemente (13), welche sich stromaufwärts der Arbeitssektion, welche den Formkopf kreuzt, in einem Bereich radial außerhalb von Bündeln der imprägnierten Verstärkungsfasern (10) erstreckt, welche von der Imprägnierstation (51) kommt, und/oder Anordnen der Arbeitssektion des zusätzlichen Elements (13), welches den Formkopf kreuzt, in Übereinstimmung mit mindestens einem Teil eines Umfangsrands, welcher die Durchgangsöffnung des Formkopfes (11) begrenzt.

8. Vorrichtung nach dem vorhergehenden Anspruch, wobei der Formkopf (11) dazu eingerichtet ist, dem Verbundprodukt einen langgestreckten Körper (2) mit einer rohrförmigen Gestalt zu verleihen; optional mit Grundflächen (4) mit einer zylindrischen Gestalt mit einem kreisförmigen Profil;
und wobei die Vorrichtung eine Mehrzahl von Positionierungsvorrichtungen (56) umfasst, welche dazu eingerichtet sind, quer über den Formkopf (11), zwei oder mehr Arbeitssektionen von jeweiligen zusätzlichen Elementen anzuordnen, um jeweilige Sätze von Vorsprüngen (3) zu bilden,
wobei optional die Positionierungsvorrichtungen winklig zueinander versetzt sind und dazu eingerichtet sind, während der Bildung des Verbundprodukts auf jeweilige Seiten desselben Verbundprodukts zu wirken, welches gebildet wird;
noch weiter optional, wobei die Vorrichtung eine Steuereinheit (60) umfasst, zum Beispiel umfassend ein digitales Steuergerät, welches kommunikativ mit jeder Positionierungsvorrichtung (56) und mit dem Zugelement (17) verbunden ist und dazu eingerichtet ist, jedes zusätzliche Element (13) synchron mit dem Zugelement (17) zu bewegen.

9. Vorrichtung nach einem der vorhergehenden Ansprüche 7 bis 8, wobei die/jede Positionierungsvorrichtung (56) auch dazu eingerichtet ist, jedes zusätzliche Element (13) von dem kontinuierlichen Halbzeug zu trennen, welches den Formkopf (11) verlässt.

10. Vorrichtung nach einem der vorhergehenden Ansprüche 7 bis 9, wobei jede/eine Positionierungsvorrichtung (56) mindestens ein Motorelement und mindestens ein angetriebenes Element umfasst und
wobei jedes zusätzliche Element (13) ein Förderer (14) ist, welcher entlang eines geschlossen Betriebswegs angeordnet ist, welcher mit dem Motorelement und dem angetriebenen Element in Eingriff steht,
wobei der Träger (14) umfasst:
- einen Grundkörper (20),
- eine Mehrzahl herausragender Elemente (21) von dem Grundkörper (20) und dazu eingerichtet, einen oder mehrere Kanäle (22) zu definieren, welche benachbart zueinander und durch die vorstehenden Elemente beabstandet sind.

11. Vorrichtung nach einem der vorhergehenden Ansprüche 6 bis 10, wobei das zusätzliche Element (13) einen Streifen aus Fasermaterial, optional ein Textilprodukt, umfasst, mit einer ersten Serie (15) von Fasern und einer zweiten Serie (16) von Fasern, welche transversal zu den Fasern der ersten Serie (15) und den Verstärkungsfasern (10) angeordnet sind, und wobei die Positionierungsvorrichtung (56) eine Zuführstation (45) des Streifens aus Fasermaterial umfasst,
wobei die Fasern der ersten und zweiten Serie (15, 16) dazu eingerichtet sind, die Vorsprünge (3) zu bilden, welche aus der Grundfläche (4) des langgestreckten Körpers (2) heraustreten, wobei optional das Verhältnis zwischen einer Dicke der Fasern der zweiten Serie (16) und einer Dicke der Fasern der ersten Serie (15) zwischen 1,5 und 10 umfasst ist.

12. Vorrichtung nach einem der vorhergehenden Ansprüche 6 bis 11, wobei das zusätzliche Element (13) einen Draht, optional einen Polyamiddraht, umfasst und wobei die Positionierungsvorrichtung (56) einen Zuführer (53) des Drahtes umfasst, welcher dazu eingerichtet ist, den Draht in einem spiralförmigen Muster um das kontinuierliche Halbzeug anzuordnen, wobei optional der Zuführer (53) eine Zuführspule ist, welche um eine ideale Zuführachse des pultrudierten Halbzeugs rotiert, und wobei der Draht einen Durchmesser aufweist, welcher zwischen 0,5 mm und 3 mm, optional zwischen 1 mm und 2 mm umfasst ist.

13. Vorrichtung nach einem der vorhergehenden Ansprüche 7 bis 12, umfassend eine Lampe (18), welche dazu eingerichtet ist, eine aktinische Strahlung, optional eine ultraviolette Strahlung, in Richtung des Produkts zu emittieren;
wobei die Lampe stromabwärts des Formkopfes arbeitet und dazu eingerichtet ist, eine mindestens teilweise Verfestigung des Kunstharzes zu ermöglichen, welches in dem pultrudierten Produkt vorhanden ist, welches den Formkopf verlässt;
und
wobei die Positionierungsvorrichtung (56) dazu eingerichtet ist, das zusätzliche Element von dem pultrudierten Halbzeug stromaufwärts von der Lampe (18) zu trennen, optional vor Aussetzen gegenüber der aktinischen Strahlung oder vor vollständiger Verfestigung des Harzes.

## Revendications

1. Procédé de pultrusion pour la fabrication d'un produit composite comprenant un corps allongé (2) tubulaire s'étendant le long d'un sens de développement prévalent (X) et lié par une surface externe comprenant :
- une surface de base (4) et
- une ou plusieurs projections (3) émergeant de la surface de base (4) et agencées transversalement au sens de développement prévalent (X) du corps allongé (2), lesdites projections ou sections successives de la même projection étant espacées à l'écart l'une de l'autre dans un sens parallèle au sens de développement prévalent (X),
ledit procédé comprenant :
- l'imprégnation d'une fibre de renforcement (10) avec de la résine synthétique sous un état liquide, éventuellement avec une résine thermodurcissable,
- le déplacement de la fibre de renforcement (10) imprégnée vers une tête de mise en forme (11), dans lequel ladite tête de mise en forme (11) présente au moins une ouverture traversante convenant à la mise en forme du produit,
- l'agencement à travers la tête de mise en forme (11) de deux ou plusieurs sections fonctionnelles d'éléments additionnels (13) respectifs configurés pour former des projections (3) respectives,
- la mise en forme de manière continue, à l'intérieur de l'ouverture de la tête de mise en forme (11), de portions consécutives d'un produit semi-fini composite continu de forme tubulaire,
- la découpe transversalement d'un segment discret du produit semi-fini continu pour définir ledit produit composite,
dans lequel des sections amont respectives de chaque élément additionnel, définies en amont de la section fonctionnelle correspondante, sont positionnées à des zones respectives radialement à l'extérieur du produit semi-fini continu.

2. Procédé selon la revendication précédente, dans lequel l'élément additionnel (13) est déplacé, concurremment et en synchronicité avec la fibre de renforcement imprégnée, vers, et à travers, la tête de mise en forme (11) ; et
dans lequel la section fonctionnelle passant à travers la tête de mise en forme est positionnée en correspondance d'au moins une partie d'un bord dans le périmètre délimitant l'ouverture traversante de la tête de mise en forme (11), en contact avec la résine imprégnée ou la fibre de renforcement (10).

3. Procédé selon l'une quelconque des revendications précédentes, dans lequel le procédé implique la séparation de chaque élément additionnel (13) du produit semi-fini continu sortant de la tête de mise en forme (11) ;
dans lequel le procédé implique également une étape de solidification comprenant :
- l'émission d'un rayonnement actinique, éventuellement par des lampes (18) ultraviolettes, dans le sens du produit semi-fini continu ; ou
- l'exposition du produit semi-fini continu à de la lumière naturelle,
et dans lequel au moins une partie de l'étape de solidification est ultérieure à l'étape d'extraction de la portion du produit continu de la tête de mise en forme (11),
et dans lequel l'étape de séparation de chaque élément additionnel (13) du produit semi-fini continu sortant de la tête de mise en forme (11) s'effectue avant l'exposition au rayonnement actinique ou la solidification complète de la résine.

4. Procédé selon l'une quelconque des revendications précédentes, dans lequel au moins une section amont dudit élément additionnel (13), s'étendant en amont par rapport à la section fonctionnelle traversant la tête de mise en forme, est positionnée au niveau d'une zone radialement à l'extérieur d'un faisceau desdites fibres de renforcement imprégnées (10), et dans lequel ledit élément additionnel (13) en coopération avec la tête de mise en forme, met en forme le produit de sorte que :
une première partie desdites fibres de renforcement, agencée dans une zone radialement externe du produit, est agencée adjacente aux, ou partiellement à l'intérieur des, dites projections, les fibres de renforcement de ladite première partie de fibres de renforcement s'étendant de manière continue le long du produit et faisant preuve d'une forme ondulée, et
une seconde partie desdites fibres de renforcement (10), qui sont agencées radialement vers l'intérieur depuis la première partie des fibres de renforcement et sont sensiblement alignées le long d'un sens parallèle au sens de développement prévalent (X) du corps allongé.

5. Procédé selon l'une quelconque des deux revendications précédentes, dans lequel chaque élément additionnel (13) est un transporteur (14) agencé le long d'un trajet fonctionnel en boucle fermée, dans lequel ledit transporteur (14) inclut :
- un corps de base (20),
- une pluralité d'éléments faisant saillie (21) depuis ledit corps de base (20) et configurés pour définir un ou plusieurs canaux transversaux (22) adjacents l'un par rapport à l'autre et alternés avec lesdits éléments faisant saillie, éventuellement dans lequel les éléments faisant saillie (21) et les canaux transversaux (22) définissent une surface externe revêtue sans joint d'une couche de matériau antiadhésif,
dans lequel l'étape de séparation de chaque élément additionnel (13) comprend une sous-étape de déplacement dudit transporteur le long de son trajet fonctionnel, pour permettre l'extraction des projections depuis les canaux (22).

6. Appareil de pultrusion pour la fabrication d'un produit composite à travers un procédé selon l'une quelconque des revendications précédentes, ledit appareil comprenant :
- un poste d'imprégnation (51) configuré pour imprégner des fibres de renforcement (10) avec de la résine synthétique sous un état liquide, éventuellement du type thermodurcissable, et de mise en forme des fibres de renforcement imprégnées, éventuellement dans lequel le poste d'imprégnation inclut une ou plusieurs cuves d'imprégnation en bain ouvert et/ou une ou plusieurs unités d'imprégnation par injection,
- une tête de mise en forme (11), fonctionnant en aval du poste d'imprégnation (51), dans lequel ladite tête de mise en forme (11) présente au moins une ouverture traversante configurée pour recevoir lesdites fibres de renforcement imprégnées et prévue pour former un produit semi-fini composite continu,
- deux ou plusieurs éléments additionnels (13) configurés pour être agencés à travers la tête de mise en forme (11) et ayant une section fonctionnelle respective configurée pour former lesdites projections (3) sur le produit semi-fini continu de forme tubulaire,
- un élément de traction (17) fonctionnant en aval de la tête de mise en forme (11) et configuré pour agir sur une portion mise en forme du produit semi-fini continu et pour appliquer sur les fibres de renforcement imprégnées une action de traction dirigée vers la tête de mise en forme (11) ;
- un poste de coupe (55) configuré pour couper transversalement des segments discrets du produit semi-fini continu pour définir un ou plusieurs produits composites.

7. Appareil selon la revendication précédente, comprenant un dispositif de positionnement (56) configuré pour :
agencer au moins une section amont d'au moins l'un desdits éléments additionnels (13), s'étendant en amont de la section fonctionnelle traversant la tête de mise en forme, au niveau d'une zone radialement extérieure des faisceaux desdites fibres de renforcement imprégnées (10) provenant du poste d'imprégnation (51), et/ou
agencer la section fonctionnelle de l'élément additionnel (13) traversant la tête de mise en forme en correspondance d'au moins une partie d'un bord dans le périmètre délimitant l'ouverture traversante de la tête de mise en forme (11).

8. Appareil selon la revendication précédente, dans lequel la tête de mise en forme (11) est configurée pour donner audit produit composite un corps allongé (2) ayant une forme tubulaire ; éventuellement avec des surfaces de base (4) ayant une forme cylindrique avec un profil circulaire ;
et dans lequel l'appareil comprend un pluralité de dispositifs de positionnement (56) configurés pour agencer à travers la tête de mise en forme (11) deux ou plusieurs sections fonctionnelles d'éléments additionnels respectifs pour former des ensembles respectifs de projections (3),
éventuellement dans lequel lesdits dispositifs de positionnement sont décalés de manière angulaire l'un par rapport à l'autre et configurés pour agir, durant une formation du produit composite, sur des côtés respectifs du même produit composite étant formés ;
même plus facultativement dans lequel l'appareil inclut une unité de commande (60), par exemple comprenant un dispositif de commande numérique, raccordé de manière à pouvoir communiquer avec chaque dispositif de positionnement (56) et avec l'élément de traction (17) et configuré pour déplacer chaque élément additionnel (13) de manière synchrone avec l'élément de traction (17).

9. Appareil selon l'une quelconque des revendications précédentes de 7 à 8, dans lequel le/chaque dispositif de positionnement (56) est également configuré pour séparer chaque élément additionnel (13) du produit semi-fini continu sortant de la tête de mise en forme (11).

10. Appareil selon l'une quelconque des revendications précédentes de 7 à 9, dans lequel chaque/un dispositif de positionnement (56) comprend au moins un élément moteur et au moins un élément entraîné et dans lequel chaque élément additionnel (13) est un transporteur (14) agencé le long d'un trajet de fonctionnement en boucle fermée engageant ledit élément moteur et ledit élément entraîné,
dans lequel ledit support (14) inclut :
- un corps de base (20),
- une pluralité d'éléments faisant saillie (21) depuis ledit corps de base (20) et configurés pour définir un ou plusieurs canaux (22) adjacents l'un par rapport à l'autre et espacés par lesdits éléments de projection.

11. Appareil selon l'une quelconque des revendications précédentes de 6 à 10, dans lequel l'élément additionnel (13) comprend une bande de matériau fibreux, éventuellement un produit textile, ayant une première série (15) de fibres et une seconde série (16) de fibres agencées transversalement aux fibres de la première série (15) et aux fibres de renforcement (10), et dans lequel le dispositif de positionnement (56) comprend un poste d'alimentation (45) de la bande de matériau fibreux,
dans lequel les fibres de la première et de la seconde série (15, 16) sont configurées pour former les projections (3) émergeant de la surface de base (4) du corps allongé (2), éventuellement dans lequel le ratio entre une épaisseur des fibres de la seconde série (16) et une épaisseur des fibres de la première série (15) est compris entre 1,5 et 10.

12. Appareil selon l'une quelconque des revendications précédentes de 6 à 11, dans lequel l'élément additionnel (13) comprend un fil, éventuellement un fil de polyamide, et dans lequel le dispositif de positionnement (56) comprend un dispositif d'alimentation (53) dudit fil configuré pour agencer le fil selon un profil hélicoïdal autour du produit semi-fini continu, éventuellement dans lequel ledit dispositif d'alimentation (53) est une bobine d'alimentation tournant autour d'un axe d'alimentation idéal du produit semi-fini de pultrusion et dans lequel ledit fil présente un diamètre compris entre 0,5 mm et 3 mm, éventuellement entre 1 mm et 2 mm.

13. Appareil selon l'une quelconque des revendications précédentes de 7 à 12 comprenant une lampe (18) configurée pour émettre un rayonnement actinique, éventuellement un rayonnement ultraviolet, vers ledit produit ;
dans lequel ladite lampe fonctionne en aval de la tête de mise en forme et elle est configurée pour permettre au moins une solidification partielle de la résine synthétique présente dans le produit de pultrusion sortant de la tête de mise en forme ; et
dans lequel le dispositif de positionnement (56) est configuré pour séparer l'élément additionnel du produit semi-fini de pultrusion en amont de ladite lampe (18), éventuellement avant une exposition audit rayonnement actinique ou avant une solidification complète de la résine.
